# EUROPEAN PATENT SPECIFICATION

(11) **EP 3 522 389 B1**
(45) Date of publication and mention of the grant of the patent: **25.05.2022**
(21) Application number: 17854747.7
(22) Date of filing: 21.09.2017
(51) Int. Cl.: H04B 7/06, H04W 72/04, H04L 5/00

(54) **METHOD AND APPARATUS FOR TRANSMITTING PHYSICAL DOWNLINK CONTROL CHANNEL, AND BASE STATION AND TERMINAL**
VERFAHREN UND VORRICHTUNG ZUR ÜBERTRAGUNG EINES PHYSIKALISCHEN DOWNLINK-STEUERKANALS, BASISSTATION UND ENDGERÄT
PROCÉDÉ ET APPAREIL DE TRANSMISSION DE CANAL DE COMMANDE DE LIAISON DESCENDANTE PHYSIQUE, ET STATION DE BASE ET TERMINAL

(30) Priority: 30.09.2016 CN 201610879234
(43) Date of publication of application: 07.08.2019
(73) Proprietor: ZTE Corporation, Shenzhen, Guangdong 518057 (CN)
(72) Inventor: LU, Zhaohua, Shenzhen Guangdong 518057 (CN); CHEN, Yijian, Shenzhen Guangdong 518057 (CN); LI, Yu Ngok, Shenzhen Guangdong 518057 (CN); WU, Hao, Shenzhen Guangdong 518057 (CN)
(74) Representative: Aipex B.V.
(86) International application number: PCT/CN2017/102611
(87) International publication number: WO 2018/059297

(56) References cited:
- WO-A1-2015/117651
- WO-A1-2016/086144
- WO-A2-2013/039352
- CN-A- 104 115 419
- US-A1- 2013 286 960
- US-A1- 2016 065 284
- NOKIA ET AL: "Beam Management Procedures in Beam Based Access", 3GPP DRAFT; R1-167286, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125810, Retrieved from the Internet: URL:http://www.3gpp.org/ftp/Meetings_3GPP_ SYNC/RAN1/Docs/ [retrieved on 2016-08-21]
- HUAWEI ET AL: "Beam Management Procedure for NR MIMO", 3GPP DRAFT; R1-166089, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125206, Retrieved from the Internet: URL:http://www.3gpp.org/ftp/Meetings_3GPP_ SYNC/RAN1/Docs/ [retrieved on 2016-08-21]

## Description

### TECHNICAL FIELD

The present invention relates to communications and, in particular, a method and apparatus for transmitting a physical downlink control channel, a base station and a terminal.

### BACKGROUND

The 5th-Genreation (5G) technology will meet requirements for diversified services in various areas such as residence, work, recreation and transportation. Even in scenarios such as dense residential areas, offices, stadiums, open-air gatherings, subways, expressways, high-speed rails and wide-area coverage places which are characterized by ultra-high traffic density, ultra-high connection density and ultra-high mobility, the 5G technology may also provide users with excellent service experience such as ultra-high definition videos, virtual reality, augmented reality, cloud desktops and online games. Meanwhile, the 5G technology will permeate into the Internet of Things and various industries and deeply integrate with industrial facilities, medical instruments and vehicles, effectively meeting requirements for diversified services in vertical industries such as industry, medical treatment and transportation and achieving the "Internet of everything".

The traditional commercial communications mainly use spectrum resources between 300 MHz and 3 GHz, which has become extremely tight and cannot meet the requirements of future wireless communications. In the future, communications will be performed by adopting a higher carrier frequency, such as 28 GHz, 45 GHz and the like. However, this type of high frequency channel has defects of a larger free propagation loss, being easily absorbed by oxygen and being greatly affected by rain attenuation, which seriously affects coverage performance of the high frequency communication system. On the other hand, the carrier frequency corresponding to the high frequency communications has a shorter wavelength, so it may ensure that more antenna elements are able to be accommodated in per unit area. The more antenna elements mean that a beamforming method may be adopted to improve antenna gains, thereby ensuring the coverage performance of the high frequency communications. In the high frequency communication scenario, an extremely narrow beam is usually used for transmitting a physical downlink control channel between a sending end and a receiving end. If transmitting beams used by the sending end and receiving beams used by the receiving end are not aligned, a success rate of the receiving end receiving the physical downlink control channel will be reduced, thereby affecting the performance of the communication system and even causing a network to stop working when the unaligned situation becomes serious.

No effective solution has been proposed to solve a technical problem in the related art that the success rate of the receiving end receiving the physical downlink control channel is relatively low. Further relevant technologies are also known from US2013/286960A1 (LI YING [US] ET AL), 31 October 2013 (2013-10-31), "Beam Management Procedures in Beam Based Access", 3GPP DRAFT, R1-167286, (NOKIA ET AL), 21 August 2016 (2016-08-21), US2013/039352A2 (SAMSUNG ELECTRONICS CO LTD [KR]; YUHYUN-KYU [KR] ET AL), 21 March 2013 (2013-03-21), and "Beam Management Procedure for NR MIMO", 3GPP DRAFT, R1-166089, (HUAWEI ET AL), 21 August 2016 (2016-08-21).

### SUMMARY

Embodiments of the present invention provide a method for transmitting a physical downlink control channel, a method for receiving a physical downlink control channel, a base station, a terminal and a storage medium to solve at least the problem in the related art that a success rate of a receiving end receiving the physical downlink control channel is relatively low.

The invention is defined by the subject-matter of the independent claims. Preferred embodiments are defined in the dependent claims.

### BRIEF DESCRIPTION OF DRAWINGS

The drawings described herein are used to provide a further understanding of the present invention and form a part of the present application. The exemplary embodiments and descriptions thereof in the present invention are used to explain the present invention and not to limit the present invention in any improper way. In the drawings:
FIG. 1 is a schematic diagram of a computer terminal according to an embodiment of the present invention;
FIG. 2 is a flowchart illustrating a method for transmitting a physical downlink control channel according to an embodiment of the present invention;
FIG. 3 is a flowchart illustrating another method for transmitting a physical downlink control channel according to an embodiment of the present invention;
FIG. 4 is a schematic diagram of an apparatus for transmitting a physical downlink control channel according to an embodiment of the present invention; and
FIG. 5 is a schematic diagram of another apparatus for transmitting a physical downlink control channel according to an embodiment of the present invention.

### DETAILED DESCRIPTION

Hereinafter the present invention will be described in detail with reference to the drawings in conjunction with the embodiments. It is to be noted that if not in collision, the embodiments and features therein in the present application may be combined with each other.

It is to be noted that the terms "first", "second" and the like in the description, claims and drawings of the present invention are used to distinguish between similar objects and are not necessarily used to describe a particular order or sequence.

### Embodiment 1

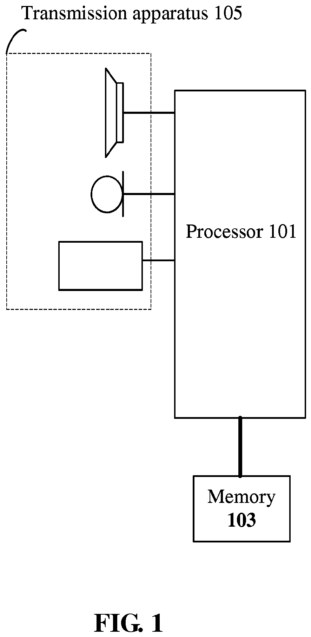

A method embodiment provided by the embodiment 1 of the present application may be executed in a mobile terminal, a computer terminal or other similar computing apparatuses. Taking the method to be executed in the terminal device as an example, as shown in FIG. 1, the terminal device may include one or more (only one is shown in FIG. 1) processors 101 (the processor 101 may include, but is not limited to, a microprocessor such as a microcontroller unit (MCU), a programmable logic device such as a field programmable gate array (FPGA), or other processing devices), a memory 103 used for storing data, and a transmission apparatus 105 used for implementing a communication function. It will be understood by those skilled in the art that the structure shown in FIG. 1 is merely illustrative, and not intended to limit the structure of the electronic device described above.

The memory 103 may be configured to store software programs and modules of application software, such as program instructions/modules corresponding to a device control method in the embodiments of the present invention. The processors 101 execute the software programs and modules stored in the memory 103 to perform various functional applications and data processing, that is, to implement the method described above. The memory may include a high-speed random access memory, and may further include a nonvolatile memory, such as one or more magnetic storage devices, flash memories or other nonvolatile solid-state memories. In some examples, the memory may further include memories which are remotely disposed relative to the processor and these remote memories may be connected to the computer terminal via a network. Examples of the network described above include, but are not limited to, the Internet, an intranet, a local area network, a mobile communication network and a combination thereof.

The transmission apparatus is configured to receive or send data via a network. The above-mentioned specific examples of the network may include a wireless network provided by a communication provider of the computer terminal. In one example, the transmission apparatus includes a network interface controller (NIC), which may be connected to other network devices via a base station and thus be capable of communicating with the Internet. In one example, the transmission apparatus may be a radio frequency (RF) module, which is configured to communicate with the Internet in a wireless way.

An embodiment of the present invention provides a method for transmitting a physical downlink control channel. It is to be noted that the steps shown in the flowcharts in the drawings may be performed by a computer system such as a group of computers capable of executing instructions, and although logical sequences are shown in the flowcharts, the shown or described steps may be executed in sequences different from those described herein in some cases.

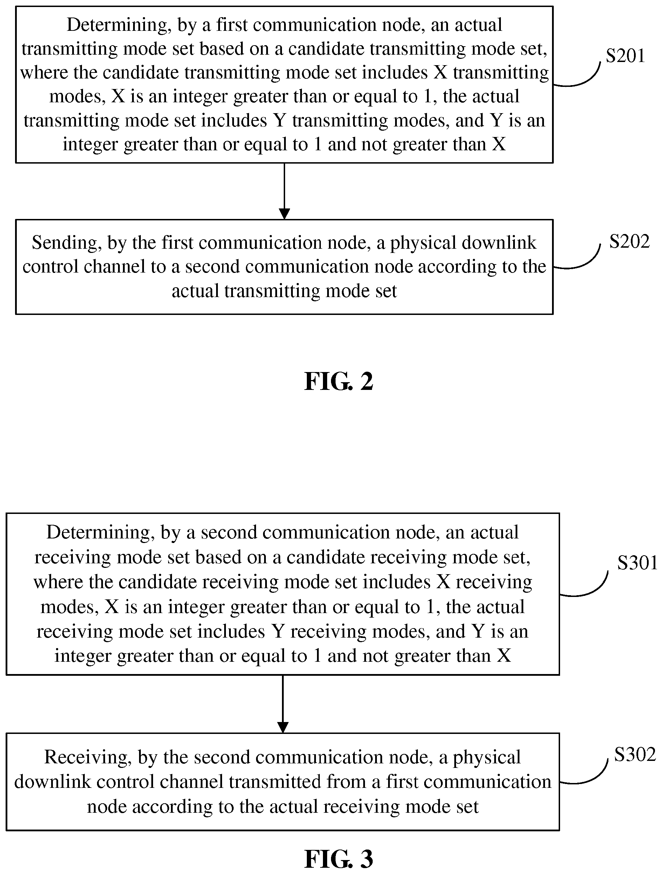

FIG. 2 is a flowchart illustrating a method for transmitting a physical downlink control channel according to an embodiment of the present invention. As shown in FIG. 2, the method includes steps described below.

In step S201, a first communication node determines an actual transmitting mode set based on a candidate transmitting mode set, where the candidate transmitting mode set includes X transmitting modes, X is an integer greater than or equal to 1, the actual transmitting mode set includes Y transmitting modes, and Y is an integer greater than or equal to 1 and not greater than X.

In step S202, the first communication node transmits a physical downlink control channel to a second communication node according to the actual transmitting mode set.

Through the embodiment described above, a first communication node determines an actual transmitting mode set based on a candidate transmitting mode set, where the candidate transmitting mode set includes X transmitting modes, X is an integer greater than or equal to 1, the actual transmitting mode set includes Y transmitting modes, and Y is an integer greater than or equal to 1 and not greater than X; and the first communication node transmits a physical downlink control channel to a second communication node according to the actual transmitting mode set. Since a more reasonable actual transmitting mode set is selected from candidate transmitting modes, the technical problem in the related art that a success rate of a receiving end receiving the physical downlink control channel is relatively low is solved, thereby implementing the technical performance of improving the success rate of the receiving end receiving the physical downlink control channel.

The transmitting modes described above are used for indicating a specific transmitting mode, and determining corresponding transmitting resources according to the specific transmitting mode. Optionally, the above steps may, but may not necessarily, be executed by a base station or a terminal.

In the embodiment described above, before the first communication node determines the actual transmitting mode set based on the candidate transmitting mode set, the method further includes: determining, by the first communication node, the candidate transmitting mode set according to a working state of the second communication node.

Optionally, the step that the first communication node determines the actual transmitting mode set based on the candidate transmitting mode set includes: determining, by the first communication node, the actual transmitting mode set from the candidate transmitting mode set according to the working state of the second communication node.

In an optional embodiment, the working state of the second communication node includes at least one of: the second communication node is in a radio resource control (RRC) connected state; the second communication node is in an idle state; the second communication node does not feed back results related to a transmitting mode measurement through an explicit mode; and the second communication node feeds back the results related to the transmitting mode measurement through the explicit mode.

In another optional embodiment, the working state of the second communication node includes at least one of: the second communication node is in an RRC unestablished state; and the second communication node is in an RRC established state.

It is to be noted that the RRC unestablished state refers to that there is no context information between a base station and a terminal, which is equivalent to an RRC idle state. The RRC unestablished state and the RRC established state may be states in the new generation (for example, in the 5G communications), and the RRC unestablished state is equivalent to the RRC idle state. The RRC established state includes two kinds: one is that the terminal is in the RRC connected state, and the other is that the terminal is in an RRC inactive state. The common point of these two states is that the network side maintains RRC information of the terminal, and the difference is that the RRC connected state requires more signaling interaction between the terminal and the base station.

Optionally, before the actual transmitting mode set is determined based on the candidate transmitting mode set, the method further includes: determining, by the first station, the candidate transmitting mode set according to information related to first feedback information, where the first feedback information is feedback information related to a candidate transmitting mode, which is transmitted from the second communication node.

Optionally, the information related to the first feedback information includes the first feedback information and/or first resource information, where the first resource information includes information of a transmission resource used by the first feedback information.

Optionally, the method further includes: transmitting, by the first communication node, acknowledgement information to the second communication node after the first communication node receives the first feedback information.

Optionally, the method further includes: executing, by the first communication node, the step of transmitting the physical downlink control channel to the second communication node according to the actual transmitting mode set after the first communication node receives the first feedback information and waits for at least Z time intervals, where a value of Z is configured by default or is acknowledged by negotiating of the first communication node and the second communication node. After receiving the feedback information, the base station needs to wait for Z time intervals in consideration of the previous scheduling and the time required for the terminal receiving beam handover.

Optionally, the step that the first communication node determines the actual transmitting mode set based on the candidate transmitting mode set includes: in a case that X is greater than 1 and Y is less than X, determining, by the first communication node, the actual transmitting mode set including first Y transmitting modes at the queen head of the candidate transmitting mode set. Optionally, the transmitting modes in the candidate transmitting mode set are ordered in terms to the strong to weak channel qualities.

Optionally, the step that the first communication node determines the actual transmitting mode set based on the candidate transmitting mode set includes: in a case that X is greater than 1 and Y is less than X, obtaining, by the first communication node, the actual transmitting mode set from the candidate transmitting mode set in a manner appointed by the first communication node and the second communication node.

Optionally, the step that the first communication node determines the actual transmitting mode set based on the candidate transmitting mode set includes: in a case that X is equal to 1 and Y is equal to 1, determining, by the first communication node, the candidate transmitting mode set as the actual transmitting mode set.

Optionally, the transmitting mode includes information of a transmitting beam used when the first communication node transmits the physical downlink control channel to the second communication node.

Optionally, the transmitting mode includes information of a demodulation reference signal used when the first communication node sends the physical downlink control channel to the second communication node.

Optionally, the step that the first communication node determines the actual transmitting mode set based on the candidate transmitting mode set includes: determining, by the first communication node, the actual transmitting mode set according to the candidate transmitting mode set and a time unit used for transmitting the physical downlink control channel. Optionally, the step that the first communication node determines the actual transmitting mode set based on the candidate transmitting mode set includes: determining, by the first communication node, the actual transmitting mode set from the candidate transmitting mode set according to capability information of the second communication node.

The capability information described above is the number of receiving modes generated by the second communication node at a time (for example, which is equal to the number of radio frequency channels of the second communication node, or is determined through the negotiation between the first communication node and the second communication node, for example, the number of receiving beams for receiving the physical downlink control channel configured by the first communication node to the second communication node and/or features of receiving beams), or the number of transmitting modes allowing the first communication node to adopt at a time. Optionally, the X candidate transmitting modes are formed by G groups of candidate mode set groups.

Specifically, subsequent transmitting modes in the X candidate transmitting modes are extracted from the G groups of candidate mode set groups fed back by the terminal. For example, the terminal feeds back a candidate mode set group 1 including transmitting beams A, B and C and a candidate mode set group 2 including transmitting beams D, E and F, and the base station may select the beams A and D to form the candidate transmitting mode set.

The embodiments of the present application are described in detail in conjunction with specific implementation scenarios.

### Implementation scenario 1

The base station transmits a beam reference signal.

The terminal determines the feedback information according to the receiving situation of the beam reference signal (such as a signal-to-noise ratio (SNR), a signal to interference plus noise ratio (SINR) and the like). The feedback information includes X beams with the best receiving quality (ordered in terms to the strong to weak receiving qualities), or X beams determined according to a specific criteria. For example, an angular correlation between the X beams is less than a value alpha and the receiving quality is greater than a value beta.

The base station receives the feedback information transmitted from the terminal and selects Y beams from the X beams. For example, the base station selects first Y beams, randomly selects Y beams from the X beams, selects Y beams according to a rule appointed by the base station and the terminal (for example, each beam in the Y beams may be received by multiple receiving beams of the terminal), selects Y beams from the X beams according to the time intervals transmitted from the physical downlink control channel (for example, the number of beams selected at part of time intervals is greater than the number of beams selected at other time intervals, so as to improve a success rate of demodulation of the physical downlink control channel sent at corresponding time intervals), or selects Y beams according to the capability information reported previously by the terminal (for example, the size of Y and a manner for selecting beams are determined according to the number of TXRUs or the number of radio frequency channels of the terminal).

The base station sends the physical downlink control channel to the terminal by using Y beams. The physical downlink control channel is used for the terminal to allocate resources and adjust transmitting power.

### Implementation scenario 2

The base station transmits a beam reference signal.

The terminal determines the feedback information according to the receiving situation of a beam reference signal (such as an SNR, an SINR and the like). The feedback information includes X beam groups, each group includes several beams, and beams between groups may be partially the same or all the same.

The base station receives the feedback information transmitted from the terminal and selects Y beams from the X beam groups. For example, the base station randomly selects Y beams from the X beam groups, selects Y beams according to a rule appointed by the base station and the terminal (for example, each beam in the Y beams may be received by multiple receiving beams of the terminal), selects Y beams from the X beams according to the time intervals transmitted from the physical downlink control channel (for example, the number of beams selected at part of time intervals is greater than the number of beams selected at other time intervals, so as to improve a success rate of demodulation of the physical downlink control channel sent at corresponding time intervals), or selects Y beams according to the capability information reported previously by the terminal (for example, the size of Y and a manner for selecting beams are determined according to the number of transmit and receive units (TXRUs) or the number of radio frequency channels of the terminal).

The base station transmits the physical downlink control channel to the terminal by using Y beams. The physical downlink control channel is used for the terminal to allocate resources and adjust transmitting power.

### Implementation scenario 3

The base station transmits a beam reference signal.

The terminal determines the feedback information according to the receiving situation of the beam reference signal (such as an SNR, an SINR and the like). The feedback information includes X beams with the best receiving quality (ordered in terms to the strong to weak receiving qualities), or X beams determined according to a specific criteria. For example, an angular correlation between the X beams is less than a value alpha and the receiving quality is greater than a value beta.

The base station receives the feedback information and transmits receiving success acknowledgement information to the terminal.

The base station selects Y beams from the X beams. For example, the base station selects first Y beams, randomly selects Y beams from the X beams, selects Y beams according to a rule appointed by the base station and the terminal (for example, each beam in the Y beams may be received by multiple receiving beams of the terminal), selects Y beams from the X beams according to the time intervals transmitted from the physical downlink control channel (for example, the number of beams selected at part of time intervals is greater than the number of beams selected at other time intervals, so as to improve a success rate of demodulation of the physical downlink control channel sent at corresponding time intervals), or selects Y beams according to the capability information reported previously by the terminal (for example, the size of Y and a manner for selecting beams are determined according to the number of TXRUs or the number of radio frequency channels of the terminal).

The base station transmits the physical downlink control channel to the terminal by using Y beams. The physical downlink control channel is used for the terminal to allocate resources and adjust transmitting power.

### Implementation scenario 4

The base station transmits a beam reference signal.

The terminal determines the feedback information according to the receiving situation of a beam reference signal (such as an SNR, an SINR and the like). The feedback information includes X beam groups, each group includes several beams, and beams between groups may be partially the same or all the same.

The base station receives the feedback information and transmits receiving success acknowledgement information to the terminal.

The base station receives the feedback information transmitted from the terminal and selects Y beams from the X beam groups. For example, the base station randomly selects Y beams from the X beam groups, selects Y beams according to a rule appointed by the base station and the terminal (for example, each beam in the Y beams may be received by multiple receiving beams of the terminal), selects Y beams from the X beams according to the time intervals transmitted from the physical downlink control channel (for example, the number of beams selected at part of time intervals is greater than the number of beams selected at other time intervals, so as to improve a success rate of demodulation of the physical downlink control channel sent at corresponding time intervals), or selects Y beams according to the capability information reported previously by the terminal (for example, the size of Y and a manner for selecting beams are determined according to the number of TXRUs or the number of radio frequency channels of the terminal).

The base station transmits the physical downlink control channel to the terminal by using Y beams. The physical downlink control channel is used for the terminal to allocate resources and adjust transmitting power.

### Implementation scenario 5

The base station transmits a beam reference signal.

The terminal determines the feedback information according to the receiving situation of the beam reference signal (such as an SNR, an SINR and the like). The feedback information includes X beams with the best receiving quality (ordered in terms to the strong to weak receiving qualities), or X beams determined according to a specific criteria. For example, an angular correlation between the X beams is less than a value alpha and the receiving quality is greater than a value beta.

The base station selects Y beams from the X beams. For example, the base station selects first Y beams, randomly selects Y beams from the X beams, selects Y beams according to a rule appointed by the base station and the terminal (for example, each beam in the Y beams may be received by multiple receiving beams of the terminal), selects Y beams from the X beams according to the time intervals transmitted from the physical downlink control channel (for example, the number of beams selected at part of time intervals is greater than the number of beams selected at other time intervals, so as to improve a success rate of demodulation of the physical downlink control channel sent at corresponding time intervals), or selects Y beams according to the capability information reported previously by the terminal (for example, the size of Y and a manner for selecting beams are determined according to the number of TXRUs or the number of radio frequency channels of the terminal).

The base station transmits the physical downlink control channel to the terminal by using Y beams after Z time intervals. The physical downlink control channel is used for the terminal to allocate resources and adjust transmitting power. A value of Z is configured by default or is acknowledged by negotiating of the base station and the terminal. For example, the terminal notifies the base station of the value of Z through signaling, or the base station notifies the terminal of the value of Z through the signaling.

### Implementation scenario 6

The base station transmits a beam reference signal.

The terminal determines the feedback information according to the receiving situation of a beam reference signal (such as an SNR, an SINR and the like). The feedback information includes X beam groups, each group includes several beams, and beams between groups may be partially the same or all the same.

The base station receives the feedback information transmitted from the terminal and selects Y beams from the X beam groups. For example, the base station randomly selects Y beams from the X beam groups, selects Y beams according to a rule appointed by the base station and the terminal (for example, each beam in the Y beams may be received by multiple receiving beams of the terminal), selects Y beams from the X beams according to the time intervals transmitted from the physical downlink control channel (for example, the number of beams selected at part of time intervals is greater than the number of beams selected at other time intervals, so as to improve a success rate of demodulation of the physical downlink control channel sent at corresponding time intervals), or selects Y beams according to the capability information reported previously by the terminal (for example, the size of Y and a manner for selecting beams are determined according to the number of TXRUs or the number of radio frequency channels of the terminal).

The base station transmits the physical downlink control channel to the terminal by using Y beams after Z time intervals. The physical downlink control channel is used for the terminal to allocate resources and adjust transmitting power. A value of Z is configured by default or is acknowledged by negotiating of the base station and the terminal. For example, the terminal notifies the base station of the value of Z through signaling, or the base station notifies the terminal of the value of Z through the signaling.

### Implementation scenario 7

The base station determines X candidate transmitting beams. The X candidate transmitting beams are from the feedback information of the terminal, are the biggest transmitting beam group supported by the base station, are selected by the base station according to actual requirements from its biggest supported transmitting beam group according to a specific rule, or are determined by the base station according to a state of the terminal. For example, when the terminal initially accesses a system and does not transmit any information related to downlink transmitting beam measurement to the base station through an explicit manner (through actual signaling bits), the base station selects beams from its biggest supported transmitting beam group for transmitting part of information of a physical downlink control channel (PDCCH) in the random access process to the terminal, and when the terminal feeds back the information related to downlink transmitting beam measurement to the base station through the explicit manner, the base station determines a set of candidate transmitting beams according to the information fed back by the terminal.

The base station determines a set of actual transmitting beams according to the set of candidate transmitting beams. For example, when the terminal transmits the physical downlink control channel on a subframe n, the base station selects one transmitting beam for transmitting the physical downlink control channel, and when the terminal transmits the physical downlink control channel on a subframe n+5, the base station selects five transmitting beams for transmitting the physical downlink control channel. The specific number of beams may be negotiated and acknowledged by the base station and the terminal. In addition, the base station may also determine the set of actual transmitting beams according to a type of content carried by the PDCCH. For example, the number of actual transmitting beams used for transmitting public control information is greater than the number of actual transmitting beams used for transmitting control information of the terminal.

The base station transmits the physical downlink control channel to the terminal by using Y beams after Z time intervals. The physical downlink control channel is used for the terminal to allocate resources and adjust transmitting power. A value of Z is configured by default or is acknowledged by negotiating of the base station and the terminal. For example, the terminal notifies the base station of the value of Z through signaling, or the base station notifies the terminal of the value of Z through the signaling.

Through the embodiment described above, the adoption of the technical solution of the present invention solves the problem of control channel transmission and receiving mode changes caused by strong channel variations in the 5th generation mobile communication system, effectively improving a success rate of demodulation of the control channel and enhancing the performance of the 5th generation mobile communication system.

According to one aspect of the embodiment of the present invention, FIG. 3 is a flowchart illustrating another method for transmitting a physical downlink control channel according to an embodiment of the present invention. As shown in FIG. 3, the method includes steps described below.

In step S301, a second communication node determines an actual receiving mode set based on a candidate receiving mode set, where the candidate receiving mode set includes X receiving modes, X is an integer greater than or equal to 1, the actual receiving mode set includes Y receiving modes, and Y is an integer greater than or equal to 1 and not greater than X.

In step S302, the second communication node receives a physical downlink control channel transmitted from a first communication node according to the actual receiving mode set.

Through the embodiment described above, a second communication node determines an actual receiving mode set based on a candidate receiving mode set, where the candidate receiving mode set includes X receiving modes, X is an integer greater than or equal to 1, the actual receiving mode set includes Y receiving modes, and Y is an integer greater than or equal to 1 and not greater than X; and the second communication node receives a physical downlink control channel transmitted from a first communication node according to the actual transmitting mode set. Since a more reasonable actual transmitting mode set is selected from candidate transmitting modes, the technical problem in the related art that a success rate of a receiving end receiving the physical downlink control channel is relatively low is solved, thereby implementing the technical performance of improving the success rate of the receiving end receiving the physical downlink control channel.

Optionally, before the second communication node determines the actual receiving mode set based on the candidate receiving mode set, the method further includes: determining, by the second communication node, the candidate receiving mode set according to a working state of the second communication node.

Optionally, the step that the second communication node determines the actual receiving mode set based on the candidate receiving mode set includes: determining, by the second communication node, the actual receiving mode set from the candidate receiving mode set according to the working state of the second communication node.

Optionally, the working state of the second communication node includes at least one of: the second communication node is in a radio resource control (RRC) connected state; the second communication node is in an idle state; the second communication node does not feed back results related to a transmitting mode measurement through an explicit mode; and the second communication node feeds back the results related to the transmitting mode measurement through the explicit mode.

Optionally, the working state of the second communication node includes at least one of: the second communication node is in an RRC unestablished state; and the second communication node is in an RRC established state.

Optionally, a step of acquir the candidate receiving mode set by the second communication node includes: determining, by the second communication node, the candidate receiving mode set according to information related to second feedback information, where the second feedback information is feedback information related to a transmitting mode of the first communication node and/or a candidate receiving mode of the second communication node, which is transmitted from the second communication node to the first communication node. The step that the second communication node determines the actual receiving mode set based on the candidate receiving mode set includes: determining, by the second communication node, the actual receiving mode set from the candidate receiving mode set according to the information related to the second feedback information.

Optionally, the information related to the second feedback information includes the second feedback information and/or second resource information, where the second resource information includes information of a transmission resource used by the second feedback information. Optionally, the method further includes: transmitting, by the first communication node, acknowledgement information to the second communication node after the first communication node receives the second feedback information.

Optionally, the method further includes: after receiving the second feedback information, executing, by the second communication node, the step of receiving the physical downlink control channel transmitted from the first communication node according to the actual receiving mode set after the second communication node transmits the second feedback information and waits for at least Z time intervals, where a value of Z is configured by default or is acknowledged by negotiating of the first communication node and the second communication node.

Optionally, the receiving modes include information of a receiving beam used when the second communication node receives the physical downlink control channel.

Optionally, the receiving mode includes information of a demodulation reference signal used when the first communication node transmits the physical downlink control channel to the second communication node.

Optionally, a step of acquiring the candidate receiving mode set by the second communication node includes: determining, by the second communication node, the candidate receiving mode set according to a time unit for receiving the physical downlink control channel. The step that the second communication node determines the actual receiving mode set according to the candidate receiving mode set includes: determining, by the second communication node, the actual receiving mode set from the candidate receiving mode set according to the time unit for receiving the physical downlink control channel.

Optionally, the step that the second communication node determines the actual receiving mode set based on the candidate receiving mode set includes: determining, by the second communication node, the actual receiving mode set from the candidate receiving mode set according to capability information of the second communication node.

The embodiments of the present application are described in detail in conjunction with specific implementation scenarios.

### Implementation scenario 1

The terminal receives a beam reference signal transmitted from the base station.

The terminal determines the feedback information according to the receiving situation of the beam reference signal (such as a signal-to-noise ratio (SNR), a signal to interference plus noise ratio (SINR) and the like), and transmits the feedback information to the base station. The feedback information includes X beams with the best receiving quality (ordered in terms to the strong to weak receiving qualities), or X beams determined according to a specific criteria. For example, an angular correlation between the X beams is less than a value alpha and the receiving quality is greater than a value beta.

The terminal determines a receiving beam set according to the feedback information and/or resources used by the feedback information. For example, the terminal determines the receiving beam set according to first Y receiving beams in the candidate receiving beam set corresponding to X beams fed back, the terminal determines the receiving beam set according to Y randomly selected receiving beams in the candidate receiving beam set corresponding to X beams fed back, or the terminal determines the receiving beam set according to Y receiving beams which are selected according to a rule appointed by the terminal and the base station in the candidate receiving beam set corresponding to X beams fed back.

The terminal, after Z time intervals when transmitting the feedback information, receives the physical downlink control channel transmitted from the base station according to the receiving beam set.

### Implementation scenario 2

The terminal receives a beam reference signal transmitted from the base station.

The terminal determines the feedback information according to the receiving situation of the beam reference signal (such as an SNR, an SINR and the like), and transmits the feedback information to the base station. The feedback information includes X beams with the best receiving quality (ordered in terms to the strong to weak receiving qualities), or X beams determined according to a specific criteria. For example, an angular correlation between the X beams is less than a value alpha and the receiving quality is greater than a value beta.

The terminal receives feedback information receiving success response information transmitted from the base station.

The terminal determines a receiving beam set according to the feedback information and/or resources used by the feedback information. For example, the terminal determines the receiving beam set according to first Y receiving beams in the candidate receiving beam set corresponding to X beams fed back, the terminal determines the receiving beam set according to Y randomly selected receiving beams in the candidate receiving beam set corresponding to X beams fed back, or the terminal determines the receiving beam set according to Y receiving beams which are selected according to a rule appointed by the terminal and the base station in the candidate receiving beam set corresponding to X beams fed back.

The terminal, after Z time intervals when transmitting the feedback information, receives the physical downlink control channel transmitted from the base station according to the receiving beam set.

### Implementation scenario 3

The terminal receives a beam reference signal transmitted from the base station.

The terminal determines the feedback information according to the receiving situation of the beam reference signal (such as an SNR, an SINR and the like), and transmits the feedback information to the base station. The feedback information includes X beams with the best receiving quality (ordered in terms to the strong to weak receiving qualities), or X beams determined according to a specific criteria. For example, an angular correlation between the X beams is less than a value alpha and the receiving quality is greater than a value beta.

The terminal determines a receiving beam set according to the feedback information and its capability information (which has been reported to the base station). In an example, when the terminal only has one radio frequency channel, the receiving beam set only includes one receiving beam. In another example, the terminal determines the receiving beam set according to first Y receiving beams in the candidate receiving beam set corresponding to X beams fed back, the terminal determines the receiving beam set according to Y randomly selected receiving beams in the candidate receiving beam set corresponding to X beams fed back, or the terminal determines the receiving beam set according to Y receiving beams which are selected according to a rule appointed by the terminal and the base station in the candidate receiving beam set corresponding to X beams fed back. The value of Y is related to capability of the terminal. For example, the more radio frequency channels of the terminal are, the bigger the value of Y is.

The terminal, after Z time intervals when transmitting the feedback information, receives the physical downlink control channel transmitted from the base station according to the receiving beam set.

It is to be noted that the transmitting mode mentioned in the present application includes at least one of: a transmitting beam, a transmitting port, a transmitting resource, a reference signal sequence, and a transmitting precoding matrix (an analog, digital or hybrid manner).

It is to be noted that the receiving mode mentioned in the present application includes at least one of: a receiving beam, a receiving port, a receiving resource, a reference signal sequence, a receiving precoding matrix (an analog, digital or hybrid manner), and a receiver algorithm.

It is to be noted that the candidate receiving mode set mentioned in the present application may include all receiving modes which may be used by the second communication node (such as a standard default manner), or may be formed by available receiving modes negotiated by the first communication node and the second communication node.

Through the embodiment described above, the adoption of the technical solution of the present invention solves the problem of control channel transmission and receiving mode changes caused by strong channel variations in the 5th generation mobile communication system, effectively improving a success rate of demodulation of the control channel and enhancing the performance of the 5th generation mobile communication system.

From the description of the implementation modes described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the solution provided by the present invention substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, etc.) to execute the method according to each embodiment of the present invention.

### Embodiment 2

An embodiment of the present invention further provides an apparatus for transmitting a physical downlink control channel. The apparatus is used for implementing the above-mentioned embodiments and preferred embodiments. What has been described will not be repeated. As used below, a term "module" may be software, hardware or a combination thereof capable of implementing predetermined functions. The apparatus in the embodiment described below is preferably implemented by software, but implementation by hardware or by a combination of software and hardware is also possible and conceived.

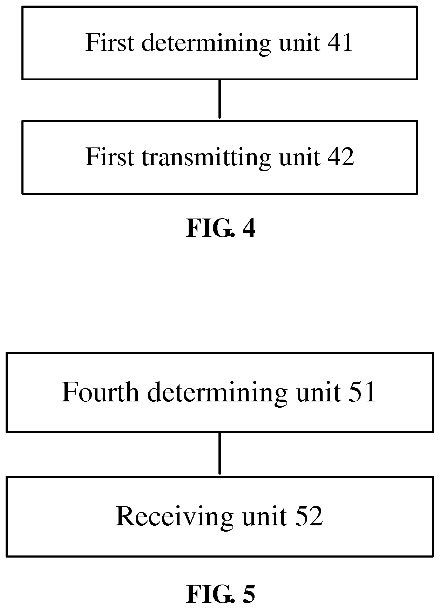

FIG. 4 is a schematic diagram of an apparatus for transmitting a physical downlink control channel according to an embodiment of the present invention. As shown in FIG. 4, the apparatus may include a first determining unit 41 and a first transmitting unit 42.

The first determining unit 41 is configured to determine an actual transmitting mode set based on a candidate transmitting mode set, where the candidate transmitting mode set includes X transmitting modes, X is an integer greater than or equal to 1, the actual transmitting mode set includes Y transmitting modes, and Y is an integer greater than or equal to 1 and not greater than X.

The first transmitting unit 42 is configured to send a physical downlink control channel to a second communication node according to the actual transmitting mode set.

Through the embodiment described above, a first determining unit determines an actual transmitting mode set based on a candidate transmitting mode set, where the candidate transmitting mode set includes X transmitting modes, X is an integer greater than or equal to 1, the actual transmitting mode set includes Y transmitting modes, and Y is an integer greater than or equal to 1 and not greater than X; and the first transmitting unit transmits a physical downlink control channel to a second communication node according to the actual transmitting mode set. Since a more reasonable actual transmitting mode set is selected from candidate transmitting modes, the technical problem in the related art that a success rate of a receiving end receiving the physical downlink control channel is relatively low is solved, thereby implementing the technical performance of improving the success rate of the receiving end receiving the physical downlink control channel.

Optionally, the apparatus further includes a second determining unit, which is configured to determine the candidate transmitting mode set according to a working state of the second communication node before the actual transmitting mode set is determined based on the candidate transmitting mode set.

Optionally, the first determining unit is further configured to determine the actual transmitting mode set from the candidate transmitting mode set according to the working state of the second communication node.

Optionally, the working state of the second communication node includes at least one of: the second communication node is in a radio resource control (RRC) connected state; the second communication node is in an idle state; the second communication node does not feed back results related to a transmitting mode measurement through an explicit mode; and the second communication node feeds back the results related to the transmitting mode measurement through the explicit mode.

Optionally, the working state of the second communication node includes at least one of: the second communication node is in an RRC unestablished state; and the second communication node is in an RRC established state.

Optionally, the apparatus further includes a third determining unit, which is configured to determine the candidate transmitting mode set according to information related to first feedback information before the actual transmitting mode set is determined based on the candidate transmitting mode set, where the first feedback information is feedback information related to a candidate transmitting mode, which is transmitted from the second communication node. Optionally, the information related to the first feedback information includes the first feedback information and/or first resource information, where the first resource information includes information of a transmission resource used by the first feedback information.

Optionally, the apparatus further includes a second transmitting unit, which is configured to transmit acknowledgement information to the second communication node after the second transmitting unit receives the first feedback information.

Optionally, the first transmitting unit is further configured to execute the step of transmitting the physical downlink control channel to the second communication node according to the actual transmitting mode set after the first transmitting unit receives the first feedback information and waits for at least Z time intervals, where a value of Z is configured by default or is acknowledged by negotiating of the first communication node and the second communication node. Optionally, the first determining unit is further configured to, in a case that X is greater than 1 and Y is less than X, determine the actual transmitting mode set including first Y transmitting modes at the queen head of the candidate transmitting mode set.

Optionally, the transmitting modes in the candidate transmitting mode set are ordered in terms to the strong to weak channel qualities.

Optionally, the first determining unit is further configured to, in a case that X is greater than 1 and Y is less than X, obtain the actual transmitting mode set from the candidate transmitting mode set in a manner appointed by the first determining unit and the second communication node. Optionally, the first determining unit is further configured to, in a case that X is equal to 1 and Y is equal to 1, use the candidate transmitting mode set as the actual transmitting mode set. Optionally, the transmitting mode includes information of a transmitting beam used when transmitting the physical downlink control channel to the second communication node. Optionally, the transmitting mode includes information of a demodulation reference signal used when transmitting the physical downlink control channel to the second communication node.

Optionally, the first determining unit is further configured to determine the actual transmitting mode set according to the candidate transmitting mode set and a time unit used for transmitting the physical downlink control channel.

Optionally, the first determining unit is further configured to determine the actual transmitting mode set from the candidate transmitting mode set according to capability information of the second communication node.

Optionally, the X candidate transmitting modes are formed by G groups of candidate mode set groups.

Through the embodiment described above, the adoption of the technical solution of the present invention solves the problem of control channel transmission and receiving mode changes caused by strong channel variations in the 5th generation mobile communication system, effectively improving a success rate of demodulation of the control channel and enhancing the performance of the 5th generation mobile communication system.

An embodiment of the present invention further provides an apparatus for transmitting a physical downlink control channel. FIG. 5 is a schematic diagram of another apparatus for transmitting a physical downlink control channel according to an embodiment of the present invention. As shown in FIG. 5, the apparatus includes a fourth determining unit 51 and a receiving unit 52. The fourth determining unit 51 is configured to determine an actual receiving mode set based on a candidate receiving mode set, where the candidate receiving mode set includes X receiving modes, X is an integer greater than or equal to 1, the actual receiving mode set includes Y receiving modes, and Y is an integer greater than or equal to 1 and not greater than X.

The receiving unit 52 is configured to receive a physical downlink control channel transmitted from a first communication node according to the actual receiving mode set.

Through the embodiment described above, a fourth determining unit determines an actual receiving mode set based on a candidate receiving mode set, where the candidate receiving mode set includes X receiving modes, X is an integer greater than or equal to 1, the actual receiving mode set includes Y receiving modes, and Y is an integer greater than or equal to 1 and not greater than X; and the receiving unit receives a physical downlink control channel transmitted from a first communication node according to the actual transmitting mode set. Since a more reasonable actual transmitting mode set is selected from candidate transmitting modes, the technical problem in the related art that a success rate of a receiving end receiving the physical downlink control channel is relatively low is solved, thereby implementing the technical performance of improving the success rate of the receiving end receiving the physical downlink control channel.

Optionally, the apparatus further includes a fifth determining unit, which is further configured to determine the candidate receiving mode set according to a working state of the second communication node.

Optionally, the fourth determining unit is further configured to determine the actual receiving mode set from the candidate receiving mode set according to the working state of the second communication node.

Optionally, the working state of the second communication node includes at least one of: the second communication node is in a radio resource control (RRC) connected state; the second communication node is in an idle state; the second communication node does not feed back results related to a transmitting mode measurement through an explicit mode; and the second communication node feeds back the results related to the transmitting mode measurement through the explicit mode.

Optionally, the working state of the second communication node includes at least one of: the second communication node is in an RRC unestablished state; and the second communication node is in an RRC established state.

Optionally, the apparatus further includes a sixth determining unit, which is configured to determine the candidate receiving mode set according to information related to second feedback information, where the second feedback information is feedback information related to a transmitting mode of the first communication node and/or a candidate receiving mode of the second communication node, which is transmitted from the second communication node to the first communication node. The fourth determining unit is further configured to determine the actual receiving mode set from the candidate receiving mode set according to information related to the second feedback information.

Optionally, the information related to the second feedback information includes the second feedback information and/or second resource information, where the second resource information includes information of a transmission resource used by the second feedback information. Optionally, the apparatus further includes a third transmitting unit, which is configured to transmit acknowledgement information to the second communication node after the third transmitting unit receives the second feedback information.

Optionally, the receiving unit is further configured to: execute the step of receiving the physical downlink control channel transmitted from the first communication node according to the actual receiving mode set after the receiving unit transmits the second feedback information and waits for at least Z time intervals, where a value of Z is configured by default or is acknowledged by negotiating of the first communication node and the second communication node.

Optionally, the receiving mode includes information of a receiving beam used when the second communication node receives the physical downlink control channel.

Optionally, the receiving mode includes information of a demodulation reference signal used when the first communication node transmits the physical downlink control channel to the second communication node.

Optionally, the apparatus further includes a sixth determining unit, which is configured to determine the candidate receiving mode set according to a time unit for receiving the physical downlink control channel. The fourth determining unit is further configured to determine the actual receiving mode set from the candidate receiving mode set according to the time unit for receiving the physical downlink control channel.

Optionally, the fourth determining unit is further configured to determine the actual receiving mode set from the candidate receiving mode set according to capability information of the second communication node.

Through the embodiment described above, the adoption of the technical solution of the present invention solves the problem of control channel transmission and receiving mode changes caused by strong channel variations in the 5th generation mobile communication system, effectively improving a success rate of demodulation of the control channel and enhancing the performance of the 5th generation mobile communication system.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment 3

According to another aspect of embodiments of the present invention, a base station is provided. The base station includes: a first processor; a first memory, which is configured to store instructions executable by the first processor; and a first transmission apparatus, which is configured to perform information transmit-receive communication according to control of the first processor; where the first processor is configured to execute following operations: determining an actual transmitting mode set based on a candidate transmitting mode set, where the candidate transmitting mode set includes X transmitting modes, X is an integer greater than or equal to 1, the actual transmitting mode set includes Y transmitting modes, and Y is an integer greater than or equal to 1 and not greater than X; and transmitting a physical downlink control channel to a second communication node according to the actual transmitting mode set. Optionally, the first processor is further configured to execute a following operation: determining the candidate transmitting mode set according to a working state of the second communication node.

Optionally, the first processor is further configured to execute a following operation: determining the actual transmitting mode set from the candidate transmitting mode set according to the working state of the second communication node.

According to another aspect of embodiments of the present invention, a terminal is provided. The terminal includes: a second processor; a second memory, which is configured to store instructions executable by the second processor; and a second transmission apparatus, which is configured to perform information transmit-receive communication according to control of the second processor; where the second processor is configured to execute following operations: determining an actual receiving mode set based on a candidate receiving mode set, where the candidate transmitting mode set includes X transmitting modes, X is an integer greater than or equal to 1, the actual receiving mode set includes Y receiving modes, and Y is an integer greater than or equal to 1 and not greater than X; and receiving a physical downlink control channel transmitted from a first communication node according to the actual receiving mode set.

Optionally, the second processor is further configured to execute a following operation: determining the candidate receiving mode set according to a working state of the second communication node.

Optionally, the second processor is further configured to execute a following operation: determining the actual receiving mode set from the candidate receiving mode set according to the working state of the second communication node.

### Embodiment 4

An embodiment of the present invention further provides a storage medium. Optionally, in this embodiment, the storage medium may be configured to store program codes for executing steps described below.

In S1, an actual transmitting mode set is determined based on a candidate transmitting mode set, where the candidate transmitting mode set includes X transmitting modes, X is an integer greater than or equal to 1, the actual transmitting mode set includes Y transmitting modes, and Y is an integer greater than or equal to 1 and not greater than X.

In S2, a physical downlink control channel is sent to a second communication node according to the actual transmitting mode set.

Optionally, the storage medium is further configured to store program codes for executing the steps described below.

In S3, an actual receiving mode set is determined based on a candidate receiving mode set, where the candidate receiving mode set includes X receiving modes, X is an integer greater than or equal to 1, the actual receiving mode set includes Y receiving modes, and Y is an integer greater than or equal to 1 and not greater than X.

In S4, a physical downlink control channel transmitted from a first communication node is received according to the actual receiving mode set.

Optionally, in the embodiment, the storage medium may include, but is not limited to, a USB flash disk, a read-only memory (ROM), a random access memory (RAM), a mobile hard disk, a magnetic disk, an optical disk or another medium capable of storing the program codes.

Optionally, in this embodiment, the processor, according to program codes stored in the storage medium, executes following steps: determining an actual transmitting mode set based on a candidate transmitting mode set, where the candidate transmitting mode set includes X transmitting modes, X is an integer greater than or equal to 1, the actual transmitting mode set includes Y transmitting modes, and Y is an integer greater than or equal to 1 and not greater than X; and transmitting a physical downlink control channel to a second communication node according to the actual transmitting mode set.

Optionally, in this embodiment, the processor, according to program codes stored in the storage medium, executes following steps: determining an actual receiving mode set based on a candidate receiving mode set, where the candidate receiving mode set includes X receiving modes, X is an integer greater than or equal to 1, the actual receiving mode set includes Y receiving modes, and Y is an integer greater than or equal to 1 and not greater than X; and receiving the physical downlink control channel transmitted from the first communication node according to the actual receiving mode set.

Optionally, for specific examples in the embodiment, reference may be made to the examples described in the above embodiments and optional implementation modes, and repetition will not be made in the embodiment.

Apparently, it should be understood by those skilled in the art that each of the above-mentioned modules or steps of the present invention may be implemented by a general-purpose computing device, the modules or steps may be concentrated on a single computing device or distributed on a network formed by multiple computing devices, and alternatively, the modules or steps may be implemented by program codes executable by the computing devices, so that the modules or steps may be stored in a storage device and executed by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention. For those skilled in the art, the present invention may have various modifications and variations. INDUSTRIAL APPLICABILITY

In the embodiments of the present invention, a first communication node determines an actual transmitting mode set based on a candidate transmitting mode set, where the candidate transmitting mode set includes X transmitting modes, X is an integer greater than or equal to 1, the actual transmitting mode set includes Y transmitting modes, and Y is an integer greater than or equal to 1 and not greater than X; and the first communication node transmits a physical downlink control channel to a second communication node according to the actual transmitting mode set. Since a more reasonable actual transmitting mode set is selected from candidate transmitting modes, the technical problem in the related art that a success rate of a receiving end receiving the physical downlink control channel is relatively low is solved, thereby implementing the technical performance of improving the success rate of the receiving end receiving the physical downlink control channel.

## Claims

1. A method for transmitting a physical downlink control channel, comprising:
determining (S201), by a first communication node, an actual transmitting mode set based on a candidate transmitting mode set, wherein the candidate transmitting mode set comprises X transmitting modes, X is an integer greater than or equal to 1, the actual transmitting mode set comprises Y transmitting modes, and Y is an integer greater than or equal to 1 and not greater than X; and
transmitting (S202), by the first communication node, a physical downlink control channel to a second communication node according to the actual transmitting mode set;
wherein
before determining, by the first communication node, the actual transmitting mode set based on the candidate transmitting mode set, the method further comprises:
determining, by the first communication node, the candidate transmitting mode set according to information related to a first feedback information, wherein the first feedback information is feedback information related to at least a candidate transmitting mode, which is transmitted from the second communication node;
**characterized in that** the method further comprises:
executing, by the first communication node, the step of transmitting the physical downlink control channel to the second communication node according to the actual transmitting mode set after the first communication node receives the first feedback information and waits for at least Z time intervals, wherein a value of Z is configured by default or is acknowledged by negotiating of the first communication node and the second communication node.

2. The method of claim 1, wherein the determining, by the first communication node, the actual transmitting mode set based on the candidate transmitting mode set comprises:
determining, by the first communication node, the actual transmitting mode set according to the candidate transmitting mode set and a time unit used for transmitting the physical downlink control channel.

3. The method of claim 1, wherein the determining, by the first communication node, the actual transmitting mode set based on the candidate transmitting mode set comprises:
determining, by the first communication node, the actual transmitting mode set from the candidate transmitting mode set according to capability information of the second communication node.

4. A method for receiving a physical downlink control channel, comprising:
determining (S301), by a second communication node, an actual receiving mode set based on a candidate receiving mode set, wherein the candidate receiving mode set comprises X receiving modes, X is an integer greater than or equal to 1, the actual receiving mode set comprises Y receiving modes, and Y is an integer greater than or equal to 1 and not greater than X; and
receiving (S302) according to the actual receiving mode set, by the second communication node, a physical downlink control channel transmitted from a first communication node;
wherein the method further comprises: acquiring, by the second communication node, the candidate receiving mode set, wherein the acquiring, by the second communication node, the candidate receiving mode set comprises:
determining, by the second communication node, the candidate receiving mode set according to information related to a second feedback information, wherein the second feedback information is feedback information related to at least a transmitting mode of the first communication node and/or at least a candidate receiving mode of the second communication node, which is transmitted from the second communication node to the first communication node;
**characterized in that** the method further comprises: executing, by the second communication node, the step of receiving the physical downlink control channel transmitted from the first communication node according to the actual receiving mode set after the second communication node transmits the second feedback information and waits for at least Z time intervals, wherein a value of Z is configured by default or is acknowledged by negotiating of the first communication node and the second communication node.

5. The method of claim 4, wherein the receiving modes comprise information of a receiving beam used when the second communication node receives the physical downlink control channel.

6. The method of claim 4, wherein the receiving modes comprise information of a demodulation reference signal used when the first communication node transmits the physical downlink control channel to the second communication node.

7. The method of claim 4, wherein the determining, by the second communication node, the actual receiving mode set based on the candidate receiving mode set comprises:
determining, by the second communication node, the actual receiving mode set from the candidate receiving mode set according to capability information of the second communication node.

8. A base station for transmitting a physical downlink control channel, comprising:
a processor;
a memory, which is configured to store instructions executable by the processor; and
a transmission apparatus, which is configured to perform information transmit-receive communication according to control of the processor;
wherein the processor is configured to execute following operations: determining an actual transmitting mode set based on a candidate transmitting mode set, wherein the candidate transmitting mode set comprises X transmitting modes, X is an integer greater than or equal to 1,
the actual transmitting mode set comprises Y transmitting modes, and Y is an integer greater than or equal to 1 and not greater than X; and transmitting a physical downlink control channel to a second communication node according to the actual transmitting mode set;
wherein before determining the actual transmitting mode set based on the candidate transmitting mode set, the processor is further configured to execute the following operation:
determining the candidate transmitting mode set according to information related to a first feedback information, wherein the first feedback information is feedback information related to at least a candidate transmitting mode, which is transmitted from the second communication node;
**characterized in that** the processor is further configured to execute the following operation: executing the operation of transmitting the physical downlink control channel to the second communication node according to the actual transmitting mode set after the base station receives the first feedback information and waits for at least Z time intervals, wherein a value of Z is configured by default or is acknowledged by negotiating of the base station and the second communication node.

9. A terminal for receiving a physical downlink control channel, comprising:
a processor;
a memory, which is configured to store instructions executable by the processor; and
a transmission apparatus, which is configured to perform information transmit-receive communication according to control of the processor;
wherein the processor is configured to execute following operations: determining an actual receiving mode set based on a candidate receiving mode set, wherein the candidate receiving mode set comprises X receiving modes, X is an integer greater than or equal to 1, the actual receiving mode set comprises Y receiving modes, and Y is an integer greater than or equal to 1 and not greater than X; and receiving a physical downlink control channel transmitted from a first communication node according to the actual receiving mode set;
wherein the processor is further configured to execute the following operation: acquiring the candidate receiving mode set, wherein the acquiring the candidate receiving mode set comprises:
determining the candidate receiving mode set according to information related to a second feedback information, wherein the second feedback information is feedback information related to at least a transmitting mode of the first communication node and/or at least a candidate receiving mode of the terminal, which is transmitted from the terminal to the first communication node;
**characterized in that** the processor is further configured to execute the following operation: receiving the physical downlink control channel transmitted from the first communication node according to the actual receiving mode set after the terminal transmits the second feedback information and waits for at least Z time intervals, wherein a value of Z is configured by default or is acknowledged by negotiating of the first communication node and the terminal.

10. A storage medium, comprising program codes stored in the storage medium, wherein when executed on a processor of a base station, causes the base station to carry out the method of any one of claims 1 to 3.

11. A storage medium, comprising program codes stored in the storage medium, wherein when executed on a processor of a terminal, causes the terminal to carry out the method of any one of claims 4 to 7.

## Patentansprüche

1. Verfahren zum Übertragen eines physikalischen Downlink-Steuerkanals, umfassend:
Bestimmen (S201) eines tatsächlichen Übertragungsmodussatzes durch einen ersten Kommunikationsknoten basierend auf einem möglichen Übertragungsmodussatz, wobei der mögliche Übertragungsmodussatz X Übertragungsmodi umfasst, X eine ganze Zahl größer oder gleich 1 ist, der tatsächliche Übertragungsmodussatz Y Übertragungsmodi umfasst und Y eine ganze Zahl größer oder gleich 1 und nicht größer als X ist; und
Übertragen (S202) eines physikalischen Downlink-Steuerkanals an einen zweiten Kommunikationsknoten durch den ersten Kommunikationsknoten gemäß dem tatsächlichen Übertragungsmodussatz;
wobei vor dem Bestimmen des tatsächlichen Übertragungsmodussatzes durch den ersten Kommunikationsknoten basierend auf dem möglichen Übertragungsmodussatz das Verfahren ferner Folgendes umfasst:
Bestimmen des möglichen Übertragungsmodussatzes durch den ersten Kommunikationsknoten gemäß Informationen, die sich auf eine erste Rückkopplungsinformation beziehen, wobei die erste Rückkopplungsinformation eine Rückkopplungsinformation ist, die sich auf mindestens einen möglichen Übertragungsmodus bezieht und von dem zweiten Kommunikationsknoten übertragen wird;
**dadurch gekennzeichnet, dass** das Verfahren ferner Folgendes umfasst:
Ausführen des Schritts des Übertragens des physikalischen Downlink-Steuerkanals an den zweiten Kommunikationsknoten durch den ersten Kommunikationsknoten gemäß dem tatsächlichen Übertragungsmodussatz, nachdem der erste Kommunikationsknoten die erste Rückkopplungsinformation empfangen hat und mindestens Z Zeitintervalle gewartet hat, wobei ein Wert von Z standardmäßig konfiguriert ist oder durch Vermitteln des ersten Kommunikationsknotens und des zweiten Kommunikationsknotens bestätigt wird.

2. Verfahren nach Anspruch 1, wobei das Bestimmen des tatsächlichen Übertragungsmodussatzes durch den ersten Kommunikationsknoten basierend auf dem möglichen Übertragungsmodussatz Folgendes umfasst:
Bestimmen des tatsächlichen Übertragungsmodussatzes durch den ersten Kommunikationsknoten gemäß dem möglichen Übertragungsmodussatz und einer Zeiteinheit, die zum Übertragen des physikalischen Downlink-Steuerkanals verwendet wird.

3. Verfahren nach Anspruch 1, wobei das Bestimmen des tatsächlichen Übertragungsmodussatzes durch den ersten Kommunikationsknoten basierend auf dem möglichen Übertragungsmodussatz Folgendes umfasst:
Bestimmen des tatsächlichen Übertragungsmodussatzes aus dem möglichen Übertragungsmodussatz durch den ersten Kommunikationsknoten gemäß Fähigkeitsinformationen des zweiten Kommunikationsknotens.

4. Verfahren zum Empfangen eines physikalischen Downlink-Steuerkanals, umfassend:
Bestimmen (S301) eines tatsächlichen Empfangsmodussatzes durch einen zweiten Kommunikationsknoten basierend auf einem möglichen Empfangsmodussatz, wobei der mögliche Empfangsmodussatz X Empfangsmodi umfasst, X eine ganze Zahl größer oder gleich 1 ist, der tatsächliche Empfangsmodussatz Y Empfangsmodi umfasst und Y eine ganze Zahl größer oder gleich 1 und nicht größer als X ist; und
Empfangen (S302) eines physikalischen Downlink-Steuerkanals, der von einem ersten Kommunikationsknoten übertragen wird, durch den zweiten Kommunikationsknoten gemäß dem tatsächlichen Empfangsmodussatz;
wobei das Verfahren ferner Folgendes umfasst: Erhalten des möglichen Empfangsmodussatzes durch den zweiten Kommunikationsknoten, wobei das Erhalten des möglichen Empfangsmodussatzes durch den zweiten Kommunikationsknoten Folgendes umfasst:
Bestimmen des möglichen Empfangsmodussatzes durch den zweiten Kommunikationsknoten gemäß Informationen, die sich auf eine zweite Rückkopplungsinformation beziehen, wobei die zweite Rückkopplungsinformation eine Rückkopplungsinformation ist, die sich auf mindestens einen Übertragungsmodus des ersten Kommunikationsknotens und/oder mindestens einen möglichen Empfangsmodus des zweiten Kommunikationsknotens bezieht und von dem zweiten Kommunikationsknoten an den ersten Kommunikationsknoten übertragen wird;
**dadurch gekennzeichnet, dass** das Verfahren ferner Folgendes umfasst: Ausführen des Schritts des Empfangens des physikalischen Downlink-Steuerkanals, der von dem ersten Kommunikationsknoten übertragen wird, durch den zweiten Kommunikationsknoten gemäß dem tatsächlichen Empfangsmodussatz, nachdem der zweite Kommunikationsknoten die zweite Rückkopplungsinformation übertragen hat und mindestens Z Zeitintervalle gewartet hat, wobei ein Wert von Z standardmäßig konfiguriert ist oder durch Vermitteln des ersten Kommunikationsknotens und des zweiten Kommunikationsknotens bestätigt wird.

5. Verfahren nach Anspruch 4, wobei die Empfangsmodi Informationen eines Empfangsstrahls umfassen, der verwendet wird, wenn der zweite Kommunikationsknoten den physikalischen Downlink-Steuerkanal empfängt.

6. Verfahren nach Anspruch 4, wobei die Empfangsmodi Informationen eines Demodulationsreferenzsignals umfassen, das verwendet wird, wenn der erste Kommunikationsknoten den physikalischen Downlink-Steuerkanal an den zweiten Kommunikationsknoten überträgt.

7. Verfahren nach Anspruch 4, wobei das Bestimmen des tatsächlichen Empfangsmodussatzes durch den zweiten Kommunikationsknoten basierend auf dem möglichen Empfangsmodussatz Folgendes umfasst:
Bestimmen des tatsächlichen Empfangsmodussatzes aus dem möglichen Empfangsmodussatz durch den zweiten Kommunikationsknoten gemäß Fähigkeitsinformationen des zweiten Kommunikationsknotens.

8. Basisstation zum Übertragen eines physikalischen Downlink-Steuerkanals, umfassend:
einen Prozessor;
einen Speicher, der dazu konfiguriert ist, Anweisungen zu speichern, die durch den Prozessor ausführbar sind; und
eine Übertragungsvorrichtung, die dazu konfiguriert ist, eine Informationskommunikation für das Übertragen und Empfangen gemäß der Steuerung des Prozessors durchzuführen;
wobei der Prozessor dazu konfiguriert ist, die folgenden Vorgänge auszuführen: Bestimmen eines tatsächlichen Übertragungsmodussatzes basierend auf einem möglichen Übertragungsmodussatz, wobei der mögliche Übertragungsmodussatz X Übertragungsmodi umfasst, X eine ganze Zahl größer oder gleich 1 ist, der tatsächliche Übertragungsmodussatz Y Übertragungsmodi umfasst und Y eine ganze Zahl größer oder gleich 1 und nicht größer als X ist; und Übertragen eines physikalischen Downlink-Steuerkanals an einen zweiten Kommunikationsknoten gemäß dem tatsächlichen Übertragungsmodussatz;
wobei vor dem Bestimmen des tatsächlichen Übertragungsmodussatzes basierend auf dem möglichen Übertragungsmodussatz der Prozessor ferner dazu konfiguriert ist, den folgenden Vorgang auszuführen:
Bestimmen des möglichen Übertragungsmodussatzes gemäß Informationen, die sich auf eine erste Rückkopplungsinformation beziehen, wobei die erste Rückkopplungsinformation eine Rückkopplungsinformation ist, die sich auf mindestens einen möglichen Übertragungsmodus bezieht und von dem zweiten Kommunikationsknoten übertragen wird;
**dadurch gekennzeichnet, dass** der Prozessor ferner dazu konfiguriert ist, den folgenden Vorgang auszuführen:
Ausführen des Vorgangs des Übertragens des physikalischen Downlink-Steuerkanals an den zweiten Kommunikationsknoten gemäß dem tatsächlichen Übertragungsmodussatz, nachdem die Basisstation die erste Rückkopplungsinformation empfangen hat und mindestens Z Zeitintervalle gewartet hat, wobei ein Wert von Z standardmäßig konfiguriert ist oder durch Vermitteln der Basisstation und des zweiten Kommunikationsknotens bestätigt wird.

9. Endgerät zum Empfangen eines physikalischen Downlink-Steuerkanals, umfassend:
einen Prozessor;
einen Speicher, der dazu konfiguriert ist, Anweisungen zu speichern, die durch den Prozessor ausführbar sind; und
eine Übertragungsvorrichtung, die dazu konfiguriert ist, eine Informationskommunikation für das Übertragen und Empfangen gemäß der Steuerung des Prozessors durchzuführen;
wobei der Prozessor dazu konfiguriert ist, die folgenden Vorgänge auszuführen: Bestimmen eines tatsächlichen Empfangsmodussatzes basierend auf einem möglichen Empfangsmodussatz, wobei der mögliche Empfangsmodussatz X Empfangsmodi umfasst, X eine ganze Zahl größer oder gleich 1 ist, der tatsächliche Empfangsmodussatz Y Empfangsmodi umfasst und Y eine ganze Zahl größer oder gleich 1 und nicht größer als X ist; und Empfangen eines physikalischen Downlink-Steuerkanals, der von einem ersten Kommunikationsknoten übertragen wird, gemäß dem tatsächlichen Empfangsmodussatz;
wobei der Prozessor ferner dazu konfiguriert ist, den folgenden Vorgang auszuführen: Erhalten des möglichen Empfangsmodussatzes, wobei das Erhalten des möglichen Empfangsmodussatzes Folgendes umfasst: Bestimmen des möglichen Empfangsmodussatzes gemäß Informationen, die sich auf eine zweite Rückkopplungsinformation beziehen, wobei die zweite Rückkopplungsinformation eine Rückkopplungsinformation ist, die sich auf mindestens einen Übertragungsmodus des ersten Kommunikationsknotens und/oder mindestens einen möglichen Empfangsmodus des Endgeräts bezieht und von dem Endgerät an den ersten Kommunikationsknoten übertragen wird;
**dadurch gekennzeichnet, dass** der Prozessor ferner dazu konfiguriert ist, den folgenden Vorgang auszuführen: Empfangen des physikalischen Downlink-Steuerkanals, der von dem ersten Kommunikationsknoten übertragen wird, gemäß dem tatsächlichen Empfangsmodussatz, nachdem das Endgerät die zweite Rückkopplungsinformation übertragen hat und mindestens Z Zeitintervalle gewartet hat, wobei ein Wert von Z standardmäßig konfiguriert ist oder durch Vermitteln des ersten Kommunikationsknotens und des Endgeräts bestätigt wird.

10. Speichermedium, umfassend Programmcodes, die in dem Speichermedium gespeichert sind, wobei die Basisstation bei Ausführung auf einem Prozessor einer Basisstation veranlasst wird, das Verfahren nach einem der Ansprüche 1 bis 3 durchzuführen.

11. Speichermedium, umfassend Programmcodes, die in dem Speichermedium gespeichert sind, wobei das Endgerät bei Ausführung auf einem Prozessor eines Endgeräts veranlasst wird, das Verfahren nach einem der Ansprüche 4 bis 7 durchzuführen.

## Revendications

1. Procédé de transmission d'un canal de commande de liaison descendante physique, comprenant :
la détermination (S201), par un premier nœud de communication, d'un ensemble de modes de transmission réels sur la base d'un ensemble de modes de transmission candidats, dans lequel l'ensemble de modes de transmission candidats comprend X modes de transmission, X est un nombre entier supérieur ou égal à 1, l'ensemble de modes de transmission réels comprend Y modes de transmission, et Y est un nombre entier supérieur ou égal à 1 et non supérieur à X ; et
la transmission (S202), par le premier nœud de communication, d'un canal de commande de liaison descendante physique à un second nœud de communication selon l'ensemble de modes de transmission réels ;
dans lequel avant la détermination, par le premier nœud de communication, de l'ensemble de modes de transmission réels sur la base de l'ensemble de modes de transmission candidats, le procédé comprend en outre :
la détermination, par le premier nœud de communication, de l'ensemble de modes de transmission candidats selon des informations liées à des premières informations de rétroaction, dans lequel les premières informations de rétroaction sont des informations de rétroaction liées à au moins un mode de transmission candidat, qui sont transmises à partir du second nœud de communication ;
**caractérisé en ce que** le procédé comprend en outre :
l'exécution, par le premier nœud de communication, de l'étape de transmission du canal de commande de liaison descendante physique au second nœud de communication selon l'ensemble de modes de transmission réels après que le premier nœud de communication a reçu les premières informations de rétroaction et attend pendant au moins Z intervalles de temps, dans lequel une valeur de Z est configurée par défaut ou est reconnue par négociation du premier nœud de communication et du second nœud de communication.

2. Procédé selon la revendication 1, dans lequel la détermination, par le premier nœud de communication, de l'ensemble de modes de transmission réels sur la base de l'ensemble de modes de transmission candidats comprend :
la détermination, par le premier nœud de communication, de l'ensemble de modes de transmission réels selon l'ensemble de modes de transmission candidats et une unité de temps utilisée pour transmettre le canal de commande de liaison descendante physique.

3. Procédé selon la revendication 1, dans lequel la détermination, par le premier nœud de communication, de l'ensemble de modes de transmission réels sur la base de l'ensemble de modes de transmission candidats comprend :
la détermination, par le premier nœud de communication, de l'ensemble de modes de transmission réels à partir de l'ensemble de modes de transmission candidats selon des informations de capacité du second nœud de communication.

4. Procédé de réception d'un canal de commande de liaison descendante physique, comprenant :
la détermination (S301), par un second nœud de communication, d'un ensemble de modes de réception réels sur la base d'un ensemble de modes de réception candidats, dans lequel l'ensemble de modes de réception candidats comprend X modes de réception, X est un nombre entier supérieur ou égal à 1, l'ensemble de modes de réception réels comprend Y modes de réception, et Y est un nombre entier supérieur ou égal à 1 et non supérieur à X ; et
la réception (S302) selon l'ensemble de modes de réception réels, par le second nœud de communication, d'un canal de commande de liaison descendante physique transmis à partir d'un premier nœud de communication ;
dans lequel le procédé comprend en outre : l'acquisition, par le second nœud de communication, de l'ensemble de modes de réception candidats, dans lequel l'acquisition, par le second nœud de communication, de l'ensemble de modes de réception candidats comprend :
la détermination, par le second nœud de communication, de l'ensemble de modes de réception candidats selon des informations liées à des secondes informations de rétroaction, dans lequel les secondes informations de rétroaction sont des informations de rétroaction liées à au moins un mode de transmission du premier nœud de communication et/ou à au moins un mode de réception candidat du second nœud de communication, qui sont transmises du second nœud de communication au premier nœud de communication ;
**caractérisé en ce que** le procédé comprend en outre :
l'exécution, par le second nœud de communication, de l'étape de réception du canal de commande de liaison descendante physique transmis à partir du premier nœud de communication selon l'ensemble de modes de réception réels après que le second nœud de communication a transmis les secondes informations de rétroaction et attend pendant au moins Z intervalles de temps, dans lequel une valeur de Z est configurée par défaut ou est reconnue par négociation du premier nœud de communication et du second nœud de communication.

5. Procédé selon la revendication 4, dans lequel les modes de réception comprennent des informations d'un faisceau de réception utilisé lorsque le second nœud de communication reçoit le canal de commande de liaison descendante physique.

6. Procédé selon la revendication 4, dans lequel les modes de réception comprennent des informations d'un signal de référence de démodulation utilisé lorsque le premier nœud de communication transmet le canal de commande de liaison descendante physique au second nœud de communication.

7. Procédé selon la revendication 4, dans lequel la détermination, par le second nœud de communication, de l'ensemble de modes de réception réels sur la base de l'ensemble de modes de réception candidats comprend :
la détermination, par le second nœud de communication, de l'ensemble de modes de réception réels à partir de l'ensemble de modes de réception candidats selon des informations de capacité du second nœud de communication.

8. Station de base pour transmettre un canal de commande de liaison descendante physique, comprenant :
un processeur ;
une mémoire, qui est configurée pour stocker des instructions exécutables par le processeur ; et
un appareil de transmission, qui est configuré pour effectuer une communication de transmission-réception d'informations selon la commande du processeur ;
dans laquelle le processeur est configuré pour exécuter les opérations suivantes : détermination d'un ensemble de modes de transmission réels sur la base d'un ensemble de modes de transmission candidats, dans laquelle l'ensemble de modes de transmission candidats comprend X modes de transmission, X est un nombre entier supérieur ou égal à 1, l'ensemble de modes de transmission réels comprend Y modes de transmission, et Y est un nombre entier supérieur ou égal à 1 et non supérieur à X ;
et transmission d'un canal de commande de liaison descendante physique à un second nœud de communication selon l'ensemble de modes de transmission réels ;
dans laquelle avant la détermination de l'ensemble de modes de transmission réels sur la base de l'ensemble de modes de transmission candidats, le processeur est en outre configuré pour exécuter l'opération suivante :
détermination de l'ensemble de modes de transmission candidats selon des informations liées à des premières informations de rétroaction, dans laquelle les premières informations de rétroaction sont des informations de rétroaction liées à au moins un mode de transmission candidat, qui sont transmises à partir du second nœud de communication ;
**caractérisée en ce que** le processeur est en outre configuré pour exécuter l'opération suivante :
exécution de l'opération de transmission du canal de commande de liaison descendante physique au second nœud de communication selon l'ensemble de modes de transmission réels après que la station de base a reçu les premières informations de rétroaction et attend pendant au moins Z intervalles de temps, dans laquelle une valeur de Z est configurée par défaut ou est reconnue par négociation de la station de base et du second nœud de communication.

9. Terminal de réception d'un canal de commande de liaison descendante physique, comprenant :
un processeur ;
une mémoire, qui est configurée pour stocker des instructions exécutables par le processeur ; et
un appareil de transmission, qui est configuré pour effectuer une communication de transmission-réception d'informations selon la commande du processeur ;
dans lequel le processeur est configuré pour exécuter les opérations suivantes : détermination d'un ensemble de modes de réception réels sur la base d'un ensemble de modes de réception candidats, dans lequel l'ensemble de modes de réception candidats comprend X modes de réception, X est un nombre entier supérieur ou égal à 1, l'ensemble de modes de réception réels comprend Y modes de réception, et Y est un nombre entier supérieur ou égal à 1 et non supérieur à X ; et réception d'un canal de commande de liaison descendante physique transmis à partir d'un premier nœud de communication selon l'ensemble de modes de réception réels ;
dans lequel le processeur est en outre configuré pour exécuter l'opération suivante : acquisition de l'ensemble de modes de réception candidats, dans lequel l'acquisition de l'ensemble de modes de réception candidats comprend : la détermination de l'ensemble de modes de réception candidats selon des informations liées des secondes informations de rétroaction, dans lequel les secondes informations de rétroaction sont des informations de rétroaction liées à au moins un mode de transmission du premier nœud de communication et/ou à au moins un mode de réception candidat du terminal, qui sont transmises du terminal au premier nœud de communication ;
**caractérisé en ce que** le processeur est en outre configuré pour exécuter l'opération suivante : réception du canal de commande de liaison descendante physique transmis à partir du premier nœud de communication selon l'ensemble de modes de réception réels après que le terminal a transmis les secondes informations de rétroaction et attend pendant au moins Z intervalles de temps, dans lequel une valeur de Z est configurée par défaut ou est reconnue par négociation du premier nœud de communication et du terminal.

10. Support de stockage, comprenant des codes de programme stockés dans le support de stockage, dans lequel, lorsqu'il est exécuté sur un processeur d'une station de base, amène la station de base à mettre en œuvre le procédé selon l'une quelconque des revendications 1 à 3.

11. Support de stockage, comprenant des codes de programme stockés dans le support de stockage, dans lequel, lorsqu'il est exécuté sur un processeur d'un terminal, amène le terminal à mettre en œuvre le procédé selon l'une quelconque des revendications 4 à 7.
